# EUROPÄISCHE PATENTSCHRIFT

(11) **EP 3 999 206 B1**
(45) Veröffentlichungstag und Bekanntmachung des Hinweises auf die Patenterteilung: **21.08.2024**
(21) Anmeldenummer: 20765257.9
(22) Anmeldetag: 01.09.2020
(51) Int. Cl.: B01D 29/23, B01D 29/96, B01D 35/027, B01D 35/147

(54) **FILTERVORRICHTUNG**
FILTER APPARATUS
APPAREIL DE FILTRE

(30) Priorität: 09.09.2019 DE 102019006455
(43) Veröffentlichungstag der Anmeldung: 25.05.2022
(73) Patentinhaber: Hydac Filtertechnik GmbH, 66280 Sulzbach/Saar (DE)
(72) Erfinder: STEHLE, Gerhard, 78467 Konstanz (DE); SAKRASCHINSKY, Michael, 66386 St. Ingbert (DE); VAN UFFELEN, Florentin, 88079 Kressbronn a.B. (DE)
(74) Vertreter: Bartels und Partner, Patentanwälte
(86) Internationale Anmeldenummer: PCT/EP2020/074308
(87) Internationale Veröffentlichungsnummer: WO 2021/047945

(56) Entgegenhaltungen:
- EP-A1- 2 092 970
- WO-A1-02/076570
- WO-A1-2020/104260
- DE-A1- 102014 002 241
- DE-A1- 102015 002 900
- DE-A1- 102015 007 691
- DE-C- 701 239
- US-B1- 7 143 897

## Beschreibung

### Filtervorrichtung

Die Erfindung betrifft eine Filtervorrichtung mit den Merkmalen im Oberbegriff von Anspruch 1.

Filtervorrichtungen dieser Art sind Stand der Technik (DE 10 2015 007 691 A1). Durch den platzsparenden Einbau in einen Hydrauliktank sind solche Filtervorrichtungen für den Einsatz bei kompakten, hydraulisch angetriebenen Geräten geeignet, bei denen der zur Verfügung stehende Einbauraum entsprechend kleinräumig ist. Der Tankeinbau ermöglicht auch eine einfache Bauweise für das Filtergehäuse, das aus einem verhältnismäßig dünnwandigen Abströmrohr gebildet ist, das sich mit einem radialen Abstand vom Filterelement vom Filterkopf aus, regelmäßig gebildet aus einer Art Deckel ins Tankinnere bis zu einer Position erstreckt, die unter dem betrieblichen Fluidniveau im Fluid- oder Vorratstank liegt.

In der Praxis kann es nun vorkommen, dass die Elementaufnahme in Form des Filtergehäuses, dass das eigentliche Filterelement aufnimmt und eine für die Elementaufnahme vorgesehene Wandung mit einer Aufnahmeöffnung am Drittbauteil, wie dem Einlaufstutzen des Tanks, einen Winkelversatz zueinander aufweisen, was das Festlegen der Filtervorrichtung am genannten Drittbauteil erschwert oder gar unmöglich macht.

Die DE 10 2014 002 241 A1 beschreibt eine Filtervorrichtung mit den Merkmalen im Oberbegriff von Anspruch 1 mit einem Filtergehäuse, in dem ein austauschbares Filterelement aufgenommen ist, und mit einem Filterkopf zum Festlegen des Filtergehäuses an einem Drittbauteil, wie einer Tankwand eines Vorratstanks, wobei mittels einer mehr als einen Freiheitsgrad zur Verfügung stellenden Lagerung das Filtergehäuse gelenkig am Filterkopf gelagert ist, wobei zur Bildung der Lagerung der Filterkopf aus zwei Kopfteilen gebildet ist, von denen das eine Kopfteil stationär an dem Drittbauteil festgelegt und das andere Kopfteil demgegenüber schwenkbar gelagert ist, wobei zur Bildung der Lagerung das schwenkbare Kopfteil, das mit dem Filtergehäuse verbunden ist, eine konvex verlaufende Lagerfläche aufweist, die in einer konkav verlaufenden Lagerfläche des stationären Kopfteils geführt ist.

Weitere Filtervorrichtungen gehen aus der WO 2020/104260 A1, der DE 701 239 C, der WO 02/076570 A1, der DE 10 2015 002 900 A1, der US 7 143 897 B1, der DE 10 2015 007 691 A1 und der EP 2 092 970 A1 hervor.

Ausgehend von diesem Stand der Technik liegt daher der Erfindung die Aufgabe zugrunde, eine Filtervorrichtung zur Verfügung zu stellen, die dem Ausgleich der Fertigungstoleranzen am Drittbauteil, wie einem Tank, dient.

Erfindungsgemäß ist diese Aufgabe durch eine Filtervorrichtung gelöst, die die Merkmale des Patentanspruches 1 in seiner Gesamtheit aufweist.

Gemäß dem kennzeichnenden Teil des Patentanspruches 1 besteht eine wesentliche Besonderheit der Erfindung darin, dass die jeweilige Lagerfläche Bestandteil einer Schale ist; dass die stationäre Lagerfläche, in axialer Richtung gesehen, die bewegte konvexe Lagerfläche derart übergreift, dass bei einer Schwenkbewegung zwecks Ausgleich eines Winkelversatzes in jedem Fall die Lagerflächen in Eingriff miteinander bleiben; und dass auf der Innenseite des stationären Kopfteiles eine umlaufende Begrenzung für die Schwenkbewegung als Anschlagfläche vorgesehen ist.

Es ist ferner vorgesehen, dass mittels einer mehr als einen Freiheitsgrad zur Verfügung stellenden Lagerung das Filtergehäuse, vorzugsweise zusammen mit dem austauschbaren Filterelement, im Betriebszustand gelenkig am Filterkopf gelagert ist. Hierdurch besteht die Möglichkeit, etwaige Fertigungstoleranzen an einem Drittbauteil, wie einem Fluidvorratstank mit seiner Umhausung, ausgleichen zu können. Ein insoweit etwaig vorhandener Winkelversatz zwischen dem Filtergehäuse als der Elementaufnahme und einer zuordenbaren Wandung mit der Aufnahmeöffnung am Drittbauteil, beispielsweise in Form des Einlaufstutzens eines Fluidvorratstanks, lässt sich dergestalt ohne Weiteres ausgleichen, indem das Filtergehäuse in nahezu beliebig vorgebbaren Einbaurichtungen gegenüber dem am Drittbauteil festgelegten Filterkopf an diesem schwenkbar gelagert ist. Insbesondere ist eine Ausgleichsmöglichkeit für mögliche Versatzfehler geschaffen, so dass eine Reduzierung der ansonsten eng einzuhaltenden Toleranzgrenzen für die Fertigung des Drittbauteils ermöglicht ist, und insbesondere lassen sich dergestalt Filtervorrichtungen auch mit in axialer Richtung lang aufbauenden Filterelementen und mit daher einhergehenden zusammengesetzten Filtergehäusen betriebssicher und mit günstigen Herstellkosten fertigbar an solchen Drittbauteilen festlegen, die regelmäßig über entsprechende Gehäusewandungen verfügen, an denen die Filtervorrichtungen festzulegen sind.

Zur Bildung der Lagerung ist der Filterkopf aus zwei Kopfteilen gebildet, von denen das eine Kopfteil stationär an dem Drittbauteil festgelegt und das andere Kopfteil demgegenüber schwenkbar gelagert ist. Im Umfang des jeweiligen Freiheitsgrades, wie sich das schwenkbare Kopfteil gegenüber dem stationären Kopfteil positionieren lässt, ist auch die Elementaufnahme in Form des Filtergehäuses, das mit dem schwenkbaren Kopfteil verbunden ist, gegenüber dem stationären Kopfteil in vorgebbaren Winkelstellungen positionierbar, um dergestalt Fertigungstoleranzen, insbesondere am Drittbauteil, ausgleichen zu können. Insbesondere ist bei der dahingehenden Winkeleinstellung einer senkrechten Einbaulage des Filtergehäuses der Vorzug zu geben, um eine ungestörte Partikelfiltration mit dem Filterelement zu erreichen.

Zur Bildung der Lagerung weist das schwenkbare Kopfteil, das mit dem Filtergehäuse verbunden ist, eine konvex verlaufende Lagerfläche auf, die in einer konkav verlaufenden Lagerfläche des stationären Kopfteils geführt ist, und die jeweilige Lagerfläche ist Bestandteil einer Schale. Dank des schalenförmigen Aufbaus ist eine Art Kugelgelenk für das Verschwenken des einen Kopfteiles mit der Elementaufnahme gegenüber dem anderen stationär angeordneten Kopfteil erreicht.

Sofern hier erfindungsgemäß von einer Schale die Rede ist, wird dabei im Sinne der Definition in der technischen Mechanik ein flächiges Tragwerk verstanden, das doppelt räumlich gekrümmt ist, und das insbesondere Belastungen sowohl senkrecht als auch in seiner jeweiligen Krümmungsebene selbst aufnehmen kann.

Des Weiteren lässt sich die erfindungsgemäße Schalenlagerung kompakt ausgestalten, so dass die erfindungsgemäße Filtervorrichtung an den zugehörigen Drittbauteilen, wie einem Fluidvorratstank nur einen geringen Einbauraum benötigt. Ferner lässt sich auch bei lang aufbauenden Filtergehäusen nebst Filterelementen mittels der Winkeleinstelleinrichtung ein funktionssicherer Einbau gewährleisten.

Bei einer weiteren vorteilhaften Ausführungsform der erfindungsgemäßen Filtervorrichtung ist vorgesehen, dass die stationär angeordnete Lagerschale die in ihr aufgenommene, schwenkbare Lagerschale radial umfasst und dass mittels einer Verriegelungseinrichtung, vorzugsweise in Form eines Nut-Feder-Systems, die Schalen im montierten Zustand durch Formschluss gegen gegenseitiges Verdrehen gesichert sind.

Da zur Montage und Demontage des Filtergehäuses mit dem Filterelement eine Drehbewegung dieser Komponenten gegenüber dem Filterkopf notwendig ist, ist über den genannten Formschluss dies möglich, da dann nicht ungewollt das schwenkbare Kopfteil gegenüber dem stationär angeordneten Kopfteil mitdrehen kann. Vielmehr verbleibt das schwenkbare Kopfteil in seiner einmal eingenommenen radialen Einbausituation gegenüber dem stationären Kopfteil und ist insoweit über den Formschluss gegenüber Verdrehen zum stationären Kopfteil gesichert, was das Lösen und das Wiederherstellen der Verbindung der Elementaufnahme vom bzw. mit dem ansonsten nach wie vor schwenkbar gehaltenen Kopfteil hemmnisfrei ermöglicht.

Bei einer weiteren bevorzugten Ausführungsform der erfindungsgemäßen Filtervorrichtung ist vorgesehen, dass in koaxialer Richtung zur Längsachse des unverschwenkten Filtergehäuses gesehen, das schwenkbare Kopfteil eine Kalotte aufweist, die einer Kalottenaufnahme im stationären Kopfteil geführt ist. Die Kalotte kann dabei eine gekrümmte Fläche eines Kugelabschnittes darstellen oder kann als eine Art flach gehaltene Kuppel ausgebildet sein. Die hier angesprochene Kalottenlagerung dient der Aufnahme von Axialkräften in Richtung der Längsachse des unverschwenkten Filtergehäuses gesehen, so dass sich die radialen Anlage- oder Berührungsflächen der einzelnen Schalen der Schalenlagerung nicht gegeneinander "verkeilen" können, so dass auch bei Auftreten von Axialkräften, wie sie auch ohne Weiteres im Filtrierbetrieb auftreten können, die angesprochene Schwenklagerung funktionsfähig bleibt. Bei bestimmten Anwendungsfällen in der Filtrationstechnik ist durch die Schalenabstützung in radialer und axialer Richtung auch eine Anpassung der Winkellage des Filtergehäuses gegenüber dem Filterkopf im Betrieb ermöglicht.

Als besonders vorteilhaft hat es sich dabei erwiesen, die Krümmungen der Schalen und die Krümmungen von Kalotte und Kalottenaufnahme derart zu wählen, dass für einen vorgebbaren Winkelversatz des Filtergehäuses die zugehörigen, miteinander in Anlage befindlichen Lagerflächen ungestört aufeinander abgleiten können. Als besonders vorteilhaft hat es sich dabei erwiesen, die Krümmungen aller in Anlage miteinander befindlichen gekrümmten Flächen gleich auszubilden und insbesondere mit einer Kugelform zu versehen.

Bei einer weiteren bevorzugten Ausführungsform der erfindungsgemäßen Filtervorrichtung ist vorgesehen, dass in Verlängerung der Kalotte in Richtung des Filtergehäuses gesehen, im schwenkbaren Kopfteil ein Bypassventil vorgesehen ist, dessen Schließteil im unbetätigten Zustand die Öffnung einer benachbart angeordneten Endkappe des Filterelementes verschließt. Aufgrund der dahingehenden Anordnung in Verbindung mit der Winkelausgleichmöglichkeit kann sichergestellt werden, dass das Filtergehäuse respektive die Elementaufnahme immer rechtwinklig zum Bypass-Dichtkegel steht; und nur dadurch ist die Dichtigkeit des Bypassventils als Ganzes gewährleistet. Insbesondere bei einem Verblocken des Filterelementmaterials aufgrund von Partikelverschmutzung lässt sich der Unfiltratstrom über das Bypassventil auf die Reinseite der Filtervorrichtung führen und ohne Beeinträchtigung des Funktionsablaufs für einen angeschlossenen hydraulischen Kreis auf die Fluidseite des Fluidvorratstanks bringen.

Vorzugsweise ist ferner vorgesehen, dass der Filterkopf in der Art eines Flansch- oder Gewindedeckels ausgebildet ist. Der Flanschdeckel lässt sich dabei von außen her an einer Tankwand des Vorratstanks mittels Festlegeschrauben festlegen, wohingegen der Gewindedeckel das Einschrauben über eine Gewindestrecke eines korrespondierenden Einsatzflansches am Vorratstank ermöglicht, so dass sich die erfindungsgemäße Filtervorrichtung an eine Vielzahl von Einbauvarianten an dahingehenden Drittbauteilen anpassen lässt.

Bei einer weiteren bevorzugten Ausführungsform der erfindungsgemäßen Filtervorrichtung ist vorgesehen, dass das Filtergehäuse mit dem Filterelement eine Baueinheit bildet, die eine Festlegeeinrichtung aufweist, die in einer Grundstellung axial in eine Aufnahmeeinrichtung des schwenkbaren Kopfteils einsetzbar ist und das nach Durchführen einer rotatorischen Bewegung aus dieser Grundstellung heraus die Festlegeeinrichtung mit der Aufnahmeeinrichtung mittels Rastmitteln in einer Verrastungsstellung in wieder lösbarer Weise verrastbar ist. Die in der Verrastungsstellung wirksamen Rastmittel sichern Festlege- und Aufnahmeeinrichtung in der Drehposition des formschlüssigen Angriffs der zugehörigen Anlageflächen miteinander, so dass auch im Betrieb der Vorrichtung die Elementaufnahme sich nicht ungewollt vom Filterkopf separiert.

Bei einer weiteren bevorzugten Ausführungsform der erfindungsgemäßen Filtervorrichtung ist vorgesehen, dass das Filtergehäuse mit radialem Abstand das Filterelement umfasst und für einen Fluiddurchtritt mit Gehäuseöffnungen versehen ist, wobei das Filterelement an seiner, dem Bypassventil entgegengesetzten Endkappe, mit seinem Inneren, das von einem Filterelementmaterial umfasst ist, über eine Öffnung mit der Umgebung, vorzugsweise in Form eines Tankinnenraumes, fluidführend verbunden ist. Dergestalt lässt sich eine Filtervorrichtung für den Einbau in einen Fluid-Vorratstank als Rücklauffilter konzipieren. Mittels der Gehäuseöffnungen lässt sich im Fluid befindliche Luft aus dem Fluid abführen.

Im Folgenden wird die erfindungsgemäße Filtervorrichtung anhand eines Ausführungsbeispiels nach der Zeichnung näher erläutert. Dabei zeigen in prinzipieller und nicht maßstäblicher Darstellung die
- Fig. 1: in der Art eines Längsschnittes, die erfindungsgemäße Filtervorrichtung im Einbauzustand an einer Tankwandung eines nicht näher dargestellten Fluidvorratstanks;
- Fig. 2: in der Art eines Längsschnittes, den in Fig. 1 an der Wandung festgelegten Filterkopf;
- Fig. 3: in der Art eines Längsschnittes, das in Fig. 1 mit dem Filterkopf verbundene Filtergehäuse mit eingesetztem Filterelement;
- Fig. 4 und 5: in einer perspektivischen Unteransicht einmal den in Fig. 1 und 2 gezeigten Filterkopf bzw. diesen als Flanschdeckel ausgebildeten Filterkopf als Gewindedeckel; und
- Fig. 6 und 7: die Filtervorrichtung nach der Fig. 1 ohne Winkel- bzw. mit einem Winkelversatz.

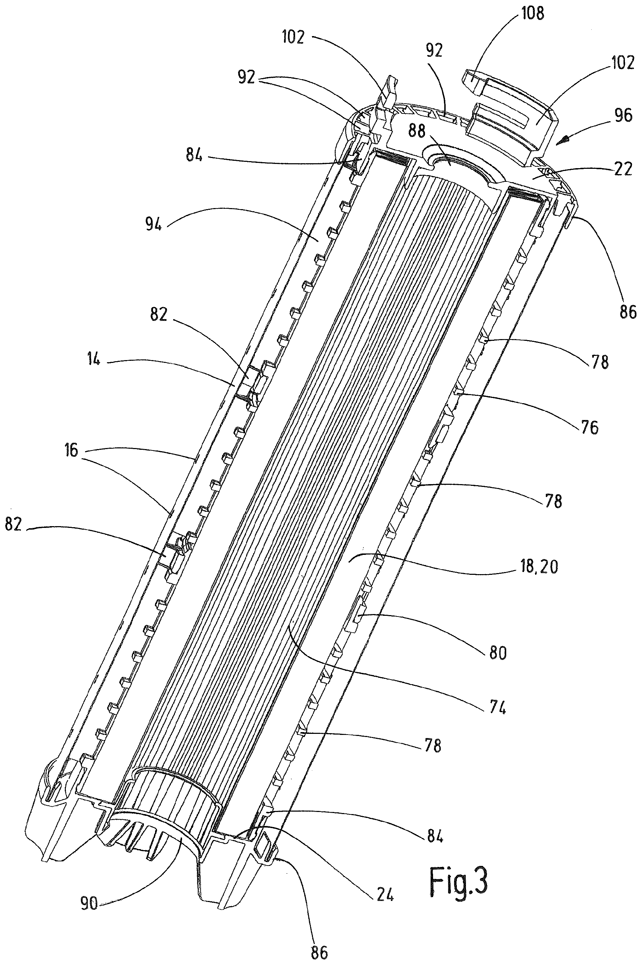

Unter Bezugnahme auf die einzelnen Figuren ist die erfindungsgemäße Filtervorrichtung am Beispiel eines für den Einbau in einen (nicht gezeigten) Tank vorgesehenen Filters, insbesondere Rücklauffilters, erläutert, wobei von dem Tank, der als Fluid-Vorratstank für einen nicht dargestellten hydraulischen Versorgungskreis verwendet werden soll, die obere Tankwandung 10 und das Innere des dahingehenden Tanks 12 dargestellt ist. Die Filtervorrichtung weist ein Filtergehäuse 14 auf, das mit Fluiddurchlassstellen 16 (siehe Fig. 3) versehen ist. Im Inneren des Filtergehäuses 14 ist ein austauschbares Filterelement 18 aufgenommen, dessen Elementmaterial sich zwischen einer oberen und einer unteren Endkappe 22 bzw. 24 erstreckt. Das als Abströmrohr dienende Filtergehäuse 14 ist in Form eines dünnwandigen Hohlzylinders ausgebildet und umgibt mit einem vorgebbaren radialen Abstand das Elementmaterial 20 des Filterelementes 18.

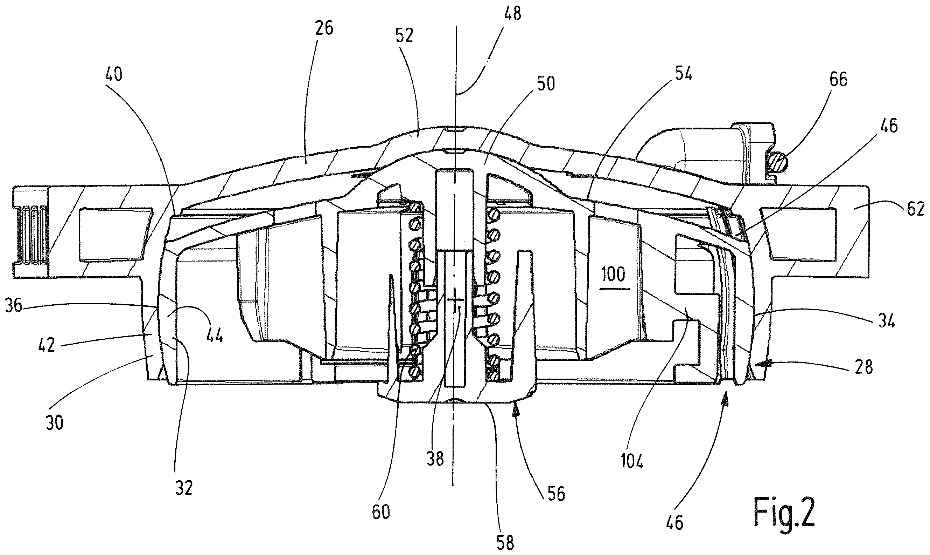

Das Filtergehäuse 14 ist an einem Filterkopf 26 lösbar angebracht, wie er in der Fig. 2 in einer Schnittdarstellung vergrößert wiedergegeben ist. Der in Fig. 2 dargestellte Filterkopf 26 ermöglicht es, das Filtergehäuse 14 mittels einer mehr als einen Freiheitsgrad zur Verfügung stellenden Lagerung 28 gelenkig verschwenkbar zu lagern. Zur Bildung der Lagerung 28 weist der Filterkopf 26 zwei Kopfteile 30, 32 auf, von denen das eine Kopfteil 30 stationär an dem Drittbauteil in Form der Tankwandung 10 festgelegt ist und das andere Kopfteil 32 ist demgegenüber schwenkbar im stationären Kopfteil 30 gelagert. Hierfür weist das schwenkbare Kopfteil 32 umfangsseitig eine konvex verlaufende Lagerfläche 34 auf, die in einer entsprechend konkav verlaufenden Lagerfläche 36 des stationären Kopfteils 30 geführt ist. Auch die als stationär bezeichnete Lagerfläche 36 ist als Umfangsfläche durchgehend auf der Innenseite des stationären Kopfteiles 30 angeordnet. Im vorliegenden Ausführungsbeispiel übergreift die stationäre Lagerfläche 36, in axialer Richtung gesehen, die bewegte konvexe Lagerfläche 34, so dass bei einer Schwenkbewegung zwecks Ausgleich eines Winkelversatzes um die auf der Bildebene senkrecht stehende Schwenkachse 38 in jedem Fall die Lagerflächen 34, 36 in Eingriff miteinander bleiben, wobei in Blickrichtung auf die Fig. 2 gesehen, auf der Innenseite des stationären Kopfteiles 30 eine umlaufende Begrenzung für die Schwenkbewegung als Anschlagfläche 40 vorgesehen ist. Dergestalt ist mit den beiden Kopfteilen 30, 32 eine Art Kugelgelenk mit vorgebbarer Schwenkbewegung für das innenliegende Kopfteil 32 geschaffen.

Die genannten Lagerflächen 34 und 36 sind jeweils Bestandteil einer Schale oder eines Schalenkörpers 42 bzw. 44. Vorzugsweise sind die beiden Kopfteile 30, 32 aus einem Kunststoffmaterial hergestellt, wie beispielsweise PA6 oder PA66. Die beiden Kopfteile 30, 32 sind vorzugsweise im Spritzgussverfahren aus dem jeweiligen Kunststoffmaterial jeweils einstückig erhalten. Es besteht aber auch die Möglichkeit, die Schalen aus Einzelsegmenten herzustellen und in Vertikalbauweise (nicht dargestellt) durch Kleben oder Schweißen miteinander zu verbinden. Die stationär angeordnete Lagerschale 42 umfasst die schwenkbare Lagerschale 44 radial, wobei mittels einer Verriegelungseinrichtung 46, vorzugsweise in Form eines Nut-Feder-Systems, die Schalen 42, 44 im montierten Zustand durch Formschluss gegen gegenseitiges, radiales Verdrehen gesichert sind.

Des Weiteren weist in koaxialer Richtung zur Längsachse 48 der Filtervorrichtung im unverschwenkten Zustand das schwenkbare Kopfteil 32 auf seiner Oberseite eine Kalotte 50 auf, die in einer Kalottenaufnahme 52 im stationären Kopfteil 30 abstandsfrei geführt ist. Die Kalotte 50, als gekrümmte Fläche eines Kugelabschnittes ausgebildet respektive als flache Kuppel, mündet fußseitig in die Oberseite 54 des schwenkbaren Kopfteils 32 aus und die dahingehende Oberseite 54 fällt in Blickrichtung auf die Fig. 2 gesehen, ausgehend von der Längsachse 48, nach außen hin ab und mündet im Übergang zur konvex ausgebildeten Lagerfläche 34 randseitig aus, wobei der dahingehend gebildete Rand das Gegenstück bildet für die umlaufende Anschlagfläche 40. Vorzugsweise sind die Krümmungen der beiden Schalen 42 und 44 sowie die Krümmungen von Kalotte 50 und Kalottenaufnahme 52 gleich ausgebildet, so dass die zuordenbaren Lagerflächen bei einem Schwenkvorgang um die Schwenkachse 38 hemmnisfrei aufeinander abgleiten können.

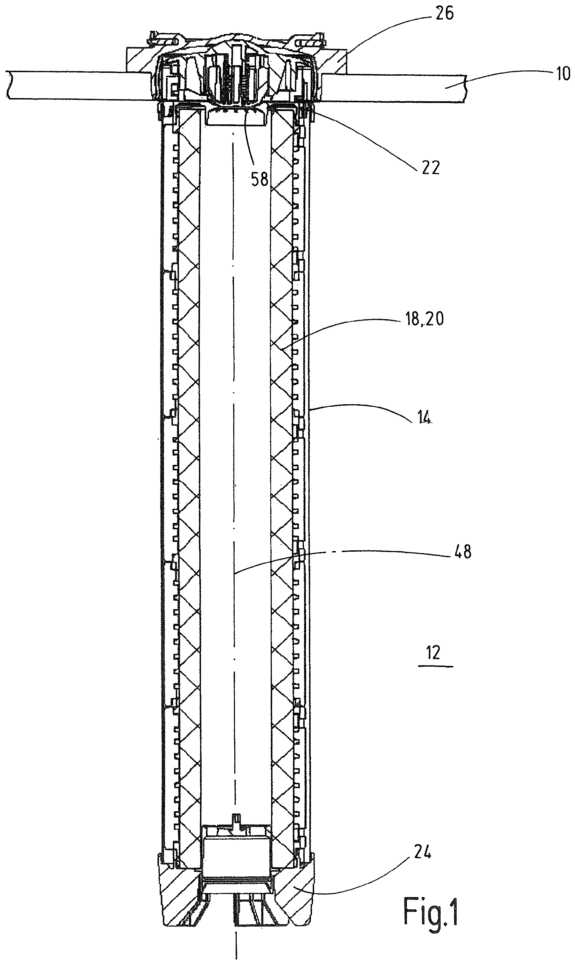

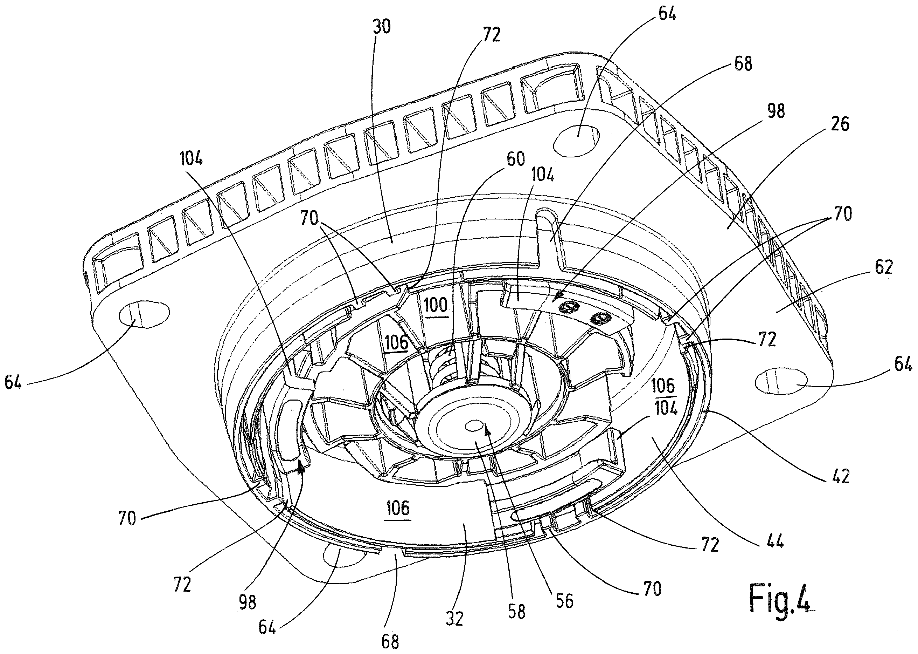

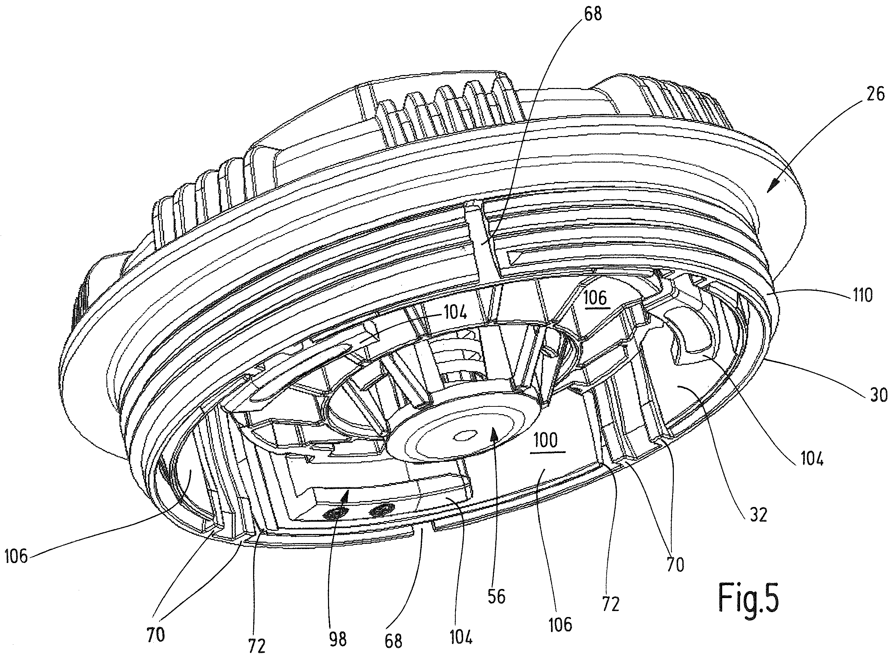

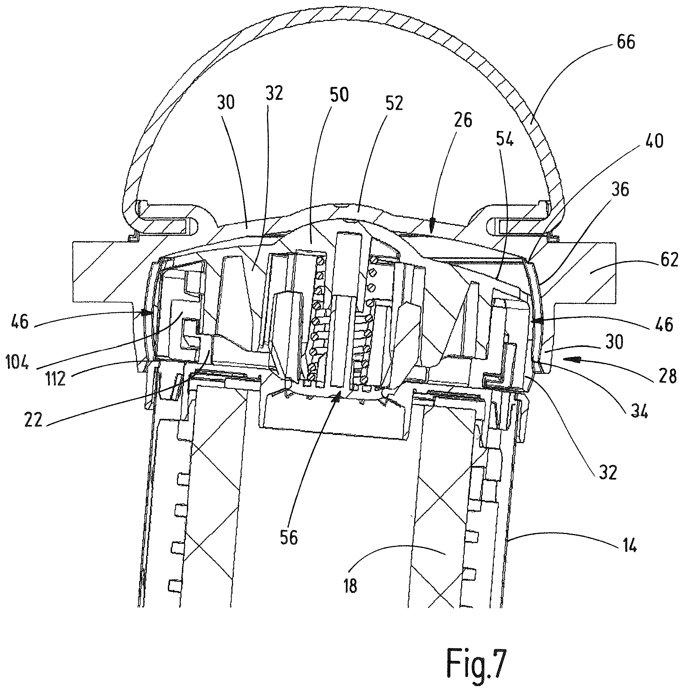

In Verlängerung der Kalotte 50 in Richtung des Filtergehäuses 14 gesehen, ist im schwenkbaren Kopfteil ein Bypassventil 56 angeordnet, dessen plattenförmiges Schließteil 58 unter der Wirkung einer Druckfeder 60 in Schließstellung gehalten wird. Des Weiteren weist das stationäre Kopfteil 30 einen vorkragenden Anlagerand 62 auf, der auf die Oberseite der Tankwandung 10 aufgelegt (siehe Fig. 1) das Festlegen des Filterkopfes 26 auf der Oberseite der Tankwandung 10 ermöglicht, in dem nicht näher dargestellte Festlegeschrauben an vorgebbaren Durchtrittsstellen 64 den Anlagerand 62 durchgreifen und dergestalt das Festlegen der Schraubverbindungen ermöglichen. Des Weiteren ist auf der Oberseite 54 des stationären Kopfteiles 30 ein schwenkbarer Handhabungsbügel 66 angelenkt, wie er insbesondere in der Fig. 7 dargestellt ist, der das Entfernen der Filtervorrichtung aus dem Drittbauteil, insbesondere in Form des Fluidvorratstanks ermöglicht. Bei Nichtgebrauch lässt sich der in Fig. 7 aufgestellte Handhabungsbügel 66 zurück verschwenken und liegt dann flach auf der Oberseite 54 des Filterkopfes 26 in der Nichtgebrauchsstellung auf. Wie weiter die Fig. 4, 5 zeigen, sind auf der Außenumfangsseite des stationären Kopfteiles 30 zwei diametral einander gegenüberliegende Einlegeschlitze 68 vorgesehen, die das Einrasten des schwenkbaren Kopfteils 32 in das stationäre Kopfteil 30 erleichtern helfen.

Wie die Fig. 4, 5 ferner zeigen, weist das stationäre Kopfteil 30 an vier diametral zur Längsachse 48 einander gegenüberliegenden Stellen auf seiner Innenseite, vier vorspringende Doppelstege 70 auf, die als sogenannte Federn in zuordenbare Nuten 72 eingreifen, die auf der Unterseite des schwenkbaren Schalenkörpers 44 dessen Wandungsverlauf unterbrechen, wobei in die jeweilige Nut 72 passgenau die als Federn eines Feder-Nut-Systems konzipierten Doppelstege 70 eingreifen. Dergestalt sind die beiden Schalenkörper 42, 44 im montierten Zustand gemäß der Darstellung nach der Fig. 4 gegen radiales Verdrehen durch Formschluss gesichert.

Das insbesondere in der Fig. 3 dargestellte Filtergehäuse 14 mit Filterelement 18, zeigt für letzteres ein plissiertes Elementmaterial 20 auf, das hohlzylinderförmig ausgebildet auf seiner Innenseite einen inneren Filterhohlraum 74 umgibt. Ferner ist das Filtermedium respektive das Elementmaterial 20 auf seiner Außenseite von einem Stützrohr 76 abgestützt, das aus einzelnen miteinander verbundenen Rohrsegmenten 78 zusammengesetzt ist. Das Stützrohr 76 stabilisiert das Elementmaterial 20 nach außen hin und ist aus einer fluiddurchlässigen Gitterstruktur für die einzelnen Rohrsegmente 78 ausgebildet. Die einzelnen Rohrsegmente 78 sind an ihren einander benachbarten Enden über Clip- oder Rastverbindungen 80 miteinander verbunden, die radial vorspringende Stege 82 aufweisen, an denen sich das Filtergehäuse 14 respektive das Abströmrohr auf seiner Innenseite druckstabil abstützen kann. Ferner ist das freie obere Ende des Stützrohres 76 als auch sein unteres Ende über jeweils eine Clip- oder Rastverbindung 84 mit der oberen Endkappe 22 bzw. mit der unteren Endkappe 24 verbunden, so dass die beiden einander benachbart gegenüberliegenden Endkappen 22, 24 über das Stützrohr 76 definiert auf Abstand zueinander gehalten sind und eine feste Gesamtstruktur miteinander bilden. Die beiden Endkappen 22, 24 weisen jeweils einen nutartigen Umfassungsrand 86 auf, in den das dünnwandige Filtergehäuse 14 endseitig mit axialem Spiel zu der oberen Endkappe 22 eingelegt und dergestalt gleichfalls am Stützrohr 76 fixiert ist. Des Weiteren weist sowohl die obere Endkappe 22 als auch die untere Endkappe 24 einen Durchlass in Form einer Durchtrittsöffnung 88 bzw. 90 auf, wobei die obere Durchtrittsöffnung 88 im normalen Filtrierbetrieb von dem Schließteil 58 des Bypassventiles 56 verschlossen ist, wohingegen die untere Durchtrittsöffnung 90 eventuell auf einen Aufsetzstutzen (nicht dargestellt) im Tank aufgesetzt ist, die fluidführende Verbindung zwischen dem Filterhohlraum 74 und dem Tankinneren 12 herstellt.

Des Weiteren weist die obere Endkappe 22 umfangsseitig einzelne Fluidpassagen 92 auf, die bei betätigtem Bypassventil 56 und mithin abgehobenem Schließteil 58 entgegen der Wirkung der Druckfeder 60 eine direkte Verbindung zwischen dem Filterhohlraum 74 über die Fluidpassagen 92 auf die Innenseite 94 des Filtergehäuses 14 zulassen, die einen Fluidraum ausbildet, der sich aus der radialen Beabstandung zwischen Filtergehäuse 14 und Stützrohr 76 nebst Elementmaterial 20 ergibt. Die obere Endkappe 22 weist eine Festlegeeinrichtung 96 auf, die zwecks Positionserhalt des Filtergehäuses 14 nebst Filterelement 18 in der eingebauten Funktionsposition mit einer Aufnahmeeinrichtung 98 zusammenwirkt, die sich im Innenraum 100 des Filterkopfes 26 befindet. Die Festlegeeinrichtung 96 weist insbesondere drei Festlegestege 102 auf, von denen in der Fig. 3 nur zwei gezeigt sind und die sich, um 120° zueinander versetzt, in der Nähe des Umfangsrandes, der den Umfassungsraum 86 nach außen hin begrenzt, von der kreisscheibenförmigen oberen Endkappe 22, in Blickrichtung auf die Fig. 3 gesehen, nach oben hin wegerstrecken. Insoweit ist die Festlegeeinrichtung 96 einstückiger Bestandteil der oberen Endkappe 22. In korrespondierender Anordnung zu den Festlegestegen 102 weist die Aufnahmeeinrichtung 98 entsprechende Führungsteile 104 mit Führungsbahnen für die Festlegestege 102 auf. Die dahingehenden Führungsteile 104 sind vorzugsweise einstückiger Bestandteil des schwenkbaren Kopfteiles 32 und auf dessen Innenseite (siehe Fig. 2) angeordnet.

Der Ablauf des Einbauvorganges für ein Filtergehäuse 14 erfolgt in Stufen, wobei in einer ersten Stufe die obere Endkappe 22 in einer Axialbewegung in den Innenraum 100 eingesetzt wird. Das Einsetzen erfolgt bei einer Drehposition des Filtergehäuses 14, bei der die Festlegestege 102 auf je einen freien Einbauraum 106 ausgerichtet sind, die sich als Freiraume (siehe Fig. 4) im Innenraum 100 zueinander um 120° versetzt befinden. Das Filtergehäuse 14 wird sodann in zwei weiteren Stufen bis zum Erreichen einer Verrastungsstellung aus dem Einbauraum 106 herausgedreht, wobei bei dieser Drehbewegung die einzelnen Festlegestege 102 durch Führungsbahnen entlang der Führungsteile 104 im Deckel 26 geführt sind. Die axiale Einsetzbewegung sowie die nachfolgende Drehbewegung kann gegen die Federkraft der Druckfeder 60 des Bypassventiles 56 erfolgen, um dergestalt eine Vorspannung in der Verrastungsstellung zu erreichen. Letztendlich übergreifen in der Verrastungsstellung die endseitig federelastisch angeordneten vorsprungartigen Rastteile 108 an den Festlegestegen 102 den jeweils zuordenbaren freien Abschlussrand, der deckelseitig angeordneten Führungsteile 104, um dann dergestalt sowohl in axialer als auch in radialer Richtung das Filtergehäuse 14 mit seinem tauschbaren Filterelement 18 am Filterkopf 26 zu sichern. Im Hinblick auf die Komplexität der dahingehenden Lösung wird, was die Einzelheiten der konstruktiven Ausführung der vorstehend vorgestellten Verrastungsmechanik anbelangt, auf die nachveröffentlichte DE 10 2019 005 323.0 verwiesen.

Die Ausführungsform nach der Fig. 5 ist insoweit nur zur Lösung nach der Fig. 4 geändert, als anstelle einer Flanschplatte der dahingehende Filterkopf 26 als Gewindedeckelteil ausgebildet, die Festlegung der Filtervorrichtung an einem Drittbauteil, wie einer Tankwandung 10, ermöglicht, die über ein nicht näher dargestelltes Flanschteil mit einem Innengewinde versehen, das Einschrauben des Filterkopfes 26 nach der Fig. 5 über dessen Außengewinde 110 ermöglicht. Ansonsten ist die Konstruktion zu der Lösung nach der Fig. 4 gleichgehalten und die bisherigen Ausführungen gelten insoweit auch für die Deckellösung nach der Fig. 5.

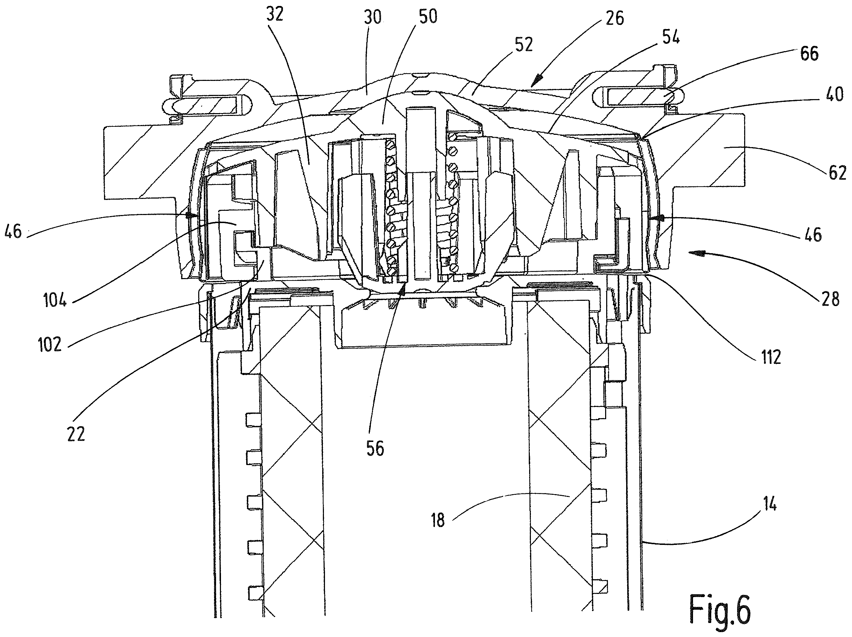

Wie insbesondere die Fig. 6 und 7 zeigen, die einmal eine Einbausituation ohne Winkelversatz bzw. einmal mit Winkelversatz betreffen, kann unabhängig von der Einbausituation betreffend ungleiche Tankwandgestaltungen, das Filtergehäuse 14 mit Filterelement 18 in axialer Gleichrichtung zu dem Bypassventil 56 über die Schwenklagerung im Filterkopf 26 gehalten werden, so dass immer ein funktionssicherer Gebrauch der Filtervorrichtung als Ganzes gesichert ist. Die angesprochene Schwenklagerung erlaubt in allen drei Raumrichtungen Schwenkbewegungen, wobei, wie die Darstellung nach der Fig. 7 zeigt, eine weitere Schwenkbegrenzung auch durch den unteren Umfassungsrand 112 der oberen Endkappe 22 gebildet ist, die dann an die Unterseite der konvex geformten Schale 42 des stationär angeordneten Kopfteiles 30 in der maximalen Schwenkauslenkung anstößt. Insoweit ist für die möglichen Schwenkbewegungen des Filtergehäuses 14 eine Art Schwenkkegel vorgegeben, dessen maximaler Öffnungskonus durch die Anschlagbegrenzung zwischen den beiden Kopfteilen 30, 32 und/oder zwischen dem Filtergehäuse 14 und dem stationären Kopfteil 30 definiert ist.

## Patentansprüche

1. Filtervorrichtung mit einem Filtergehäuse (14), in dem ein austauschbares Filterelement (18) aufgenommen ist, und mit einem Filterkopf (26) zum Festlegen des Filtergehäuses (14) an einem Drittbauteil, wie einer Tankwand (10) eines Vorratstanks, wobei mittels einer mehr als einen Freiheitsgrad zur Verfügung stellenden Lagerung (28) das Filtergehäuse (14) gelenkig am Filterkopf (26) gelagert ist,
wobei zur Bildung der Lagerung (28) der Filterkopf (26) aus zwei Kopfteilen (30, 32) gebildet ist, von denen das eine Kopfteil (30) stationär an dem Drittbauteil (10) festgelegt und das andere Kopfteil (32) demgegenüber schwenkbar gelagert ist,
wobei zur Bildung der Lagerung (28) das schwenkbare Kopfteil (32), das mit dem Filtergehäuse (14) verbunden ist, eine konvex verlaufende Lagerfläche (34) aufweist, die in einer konkav verlaufenden Lagerfläche (36) des stationären Kopfteils (30) geführt ist,
**dadurch gekennzeichnet,**
**dass** die jeweilige Lagerfläche (34, 36) Bestandteil einer Schale (44, 42) ist;
**dass** die stationäre Lagerfläche (36), in axialer Richtung gesehen, die bewegte konvexe Lagerfläche (34) derart übergreift, dass bei einer Schwenkbewegung zwecks Ausgleich eines Winkelversatzes in jedem Fall die Lagerflächen (34, 36) in Eingriff miteinander bleiben; und
**dass** auf der Innenseite des stationären Kopfteiles (30) eine umlaufende Begrenzung für die Schwenkbewegung als Anschlagfläche (40) vorgesehen ist.

2. Filtervorrichtung nach Anspruch 1, **dadurch gekennzeichnet, dass** die stationär angeordnete Lagerschale (42) die schwenkbare Lagerschale (44) radial umfasst und dass mittels einer Verriegelungseinrichtung (46), vorzugsweise in Form eines Nut-Feder-Systems (70, 72), die Schalen (42, 44) im montierten Zustand durch Formschluss gegen gegenseitiges Verdrehen gesichert sind.

3. Filtervorrichtung nach Anspruch 1 oder 2, **dadurch gekennzeichnet, dass** in koaxialer Richtung zur Längsachse (48) des unverschwenkten Filtergehäuses (14) gesehen, das schwenkbare Kopfteil (32) eine Kalotte (50) aufweist, die in einer Kalottenaufnahme (52) im stationären Kopfteil (30) geführt ist.

4. Filtervorrichtung nach Anspruch 3, **dadurch gekennzeichnet, dass** die Krümmungen der Schalen (42, 44) und die Krümmungen von Kalotte (50) und Kalottenaufnahme (52) derart gewählt sind, dass für einen Winkelversatz des Filtergehäuses (14), die zugehörigen miteinander in Anlage befindlichen Lagerflächen ungestört aufeinander abgleiten können.

5. Filtervorrichtung nach Anspruch 3 oder 4, **dadurch gekennzeichnet, dass** in Verlängerung der Kalotte (50) in Richtung des Filtergehäuses (14) gesehen, im schwenkbaren Kopfteil (32) ein Bypassventil (56) vorgesehen ist, dessen Schließteil (58) im unbetätigten Zustand die Öffnung (88) einer benachbart angeordneten Endkappe (22) des Filtergehäuses (14) verschließt.

6. Filtervorrichtung nach einem der vorstehenden Ansprüche, **dadurch gekennzeichnet, dass** der Filterkopf (26) in der Art eines Flansch- oder Gewindedeckels ausgebildet ist.

7. Filtervorrichtung nach einem der vorstehenden Ansprüche, **dadurch gekennzeichnet, dass** das Filtergehäuse (14) mit dem Filterelement (18) eine Baueinheit bildet, die eine Festlegeeinrichtung (96) aufweist, die in einer Grundstellung axial in eine Aufnahmeeinrichtung (98) des schwenkbaren Kopfteiles (32) einsetzbar ist, und dass nach Durchführen einer rotatorischen Bewegung aus dieser Grundstellung heraus, die Festlegeeinrichtung (96) mit der Aufnahmeeinrichtung (98) mittels Rastmitteln (108) in einer Verrastungsstellung miteinander verrastbar sind.

8. Filtervorrichtung nach einem der vorstehenden Ansprüche, **dadurch gekennzeichnet, dass** das Filtergehäuse (14) mit radialem Abstand das Filterelement (18) umfasst und für einen Fluiddurchtritt mit Gehäuseöffnungen (16) versehen ist, und dass das Filterelement (18) an seiner dem Bypassventil (56) entgegengesetzten Endkappe (24) mit seinem Inneren (74), das von einem Filterelementmaterial (20) umfasst ist, über eine Öffnung (90) mit der Umgebung, vorzugsweise in Form eines Tankinnenraumes (12), fluidführend verbunden ist.

## Claims

1. Filter apparatus having a filter housing (14), in which a replaceable filter element (18) is received, and having a filter head (26) to fix the filter housing (14) on a third-party component such as a tank wall (10) of a storage tank, wherein, by means of a mounting (28) providing more than one degree of freedom, the filter housing (14) is mounted in an articulated manner to the filter head (26),
wherein, to form the mounting (28), the filter head (26) is formed by two head parts (30, 32), of which one head part (30) is fixed in a stationary manner to the third-party component (10) and the other head part (32) is pivotally mounted opposite thereto, wherein, to form the mounting (28), the pivotable head part (32), which is connected to the filter housing (14), has a bearing face (34) extending in a convex manner, which is guided in a bearing face (36) of the stationary head part (30) extending in a concave manner,
**characterised**
**in that** the respective bearing face (34, 36) forms part of a shell (44, 42);
**in that** the stationary bearing surface (36), viewed in the axial direction, extends over the moved convex bearing face (34) such that the bearing faces (34, 36) always remain in engagement with one another in the event of a pivoting movement in order to compensate an angular offset; and
**in that** a peripheral delimitation for the pivoting movement is provided as a stop surface (40) on the inside of the stationary head part (30).

2. Filter apparatus according to claim 1, **characterised in that** the bearing shell (42) arranged in a stationary manner surrounds the pivotable bearing shell (44) radially and **in that**, by means of a locking device (46), preferably in the form of a tongue-and-groove system (70, 72), in the mounted state, the shells (42, 44) are secured against mutual twisting by means of a form-locking connection.

3. Filter apparatus according to either claim 1 or claim 2, **characterised in that**, viewed in the coaxial direction to the longitudinal axis (48) of the unpivoted filter housing (14), the pivotable head part (32) comprises a calotte (50), which is mounted in a calotte holder (52) in the stationary head part (30).

4. Filter apparatus according to claim 3, **characterised in that** the curves of the shells (42, 44) and the curves of the calotte (50) and calotte holder (52) are selected such that the associated bearing faces which are in contact with one another slide smoothly on top of one another for an angular offset of the filter housing (14).

5. Filter apparatus according to either claim 3 or claim 4, **characterised in that**, viewed in the extension of the calotte (50) in the direction of the filter housing (14), a bypass valve (56) is provided in the pivotable head part (32), the closing part (58) of said bypass valve sealing the opening (88) of an adjacently arranged end cap (22) of the filter housing (14) when said closing part is unactuated.

6. Filter apparatus according to any of the preceding claims, **characterised in that** the filter head (26) is configured in the form of a flanged or threaded cover.

7. Filter apparatus according to any of the preceding claims, **characterised in that** the filter housing (14), with the filter element (18), forms a structural unit that comprises a fixing device (96), which, in an original position, can be inserted axially into a receiving device (98) of the pivotable head part (32), and **in that**, after carrying out a rotational movement from this original position, the fixing device (96) can be latched together with the receiving device (98) by latching means (108) in a latching position.

8. Filter apparatus according to any of the preceding claims, **characterised in that** the filter housing (14) surrounds the filter element (18) at a radial distance and is furnished with housing openings (16) to allow fluid to pass through, and **in that** the filter element (18), on its end cap (24) opposite the bypass valve (56), is connected in a fluid-conveying manner to the environment, preferably in the form of an internal tank chamber (12), with its interior (74), which is surrounded by a filter element material (20), by means of an opening (90).

## Revendications

1. Installation de filtration comprenant une enveloppe (14) de filtre, dans laquelle un élément (18) de filtre remplaçable est reçu, et comprenant une tête (26) de filtre pour la fixation de l'enveloppe (14) de filtre à une pièce tierce, comme la paroi (10) d'un réservoir, dans laquelle, au moyen d'un montage (28) mettant à disposition plus d'un degré de liberté, l'enveloppe (14) de filtre est articulée sur la tête (26) de filtre,
dans laquelle, pour la formation du montage (28), la tête (26) de filtre est formée de deux parties (30, 32) de tête, dont l'une (30) est fixée de manière fixe à la pièce (10) tierce et dont l'autre partie (32) est montée pivotante par rapport à celle-ci,
dans laquelle, pour la formation du montage (28), la partie (32) pivotante de la tête, qui est reliée à l'enveloppe (14) de filtre, a une surface (34) d'appui s'étendant de manière convexe, qui est guidée dans une surface (36) d'appui s'étendant de manière concave de la partie (30) de tête fixe,
**caractérisée**
**en ce que** la surface (34, 36) respective d'appui est une partie constitutive d'une coque (44, 42) ;
**en ce que** la surface (36) d'appui fixe chevauche, considéré dans la direction axiale, la surface (34) d'appui convexe déplacée de manière à ce que, lors d'un mouvement de pivotement en vue de compenser un décalage angulaire, en tout cas, les surfaces (34, 36) d'appui restent en prise l'une avec l'autre ; et
**en ce que**, sur la face intérieure de la partie (30) de tête fixe est prévue, sous la forme d'une surface (40) de butée, une limitation faisant le tour pour le mouvement de pivotement.

2. Installation de filtration suivant la revendication 1, **caractérisée en ce que** la coque (42) d'appui montée fixe entoure radialement la coque (44) d'appui pivotante et **en ce que**, au moyen d'un dispositif (46) de verrouillage, de préférence sous la forme d'un système (70, 72) à tenon et mortaise, les coques (42, 44) sont, dans l'état monté, empêchées par complémentarité de forme de tourner l'une par rapport à l'autre.

3. Installation de filtration suivant la revendication 1 ou 2, **caractérisée en ce que**, considéré dans la direction coaxiale à l'axe (48) longitudinal de l'enveloppe (14) de filtre non pivotée, la partie (32) de tête pivotante a une calotte (50), qui est guidée dans un logement (52) de calotte de la partie (30) de tête fixe.

4. Installation de filtration suivant la revendication 3, **caractérisée en ce que** les courbures des coques (42, 44) et les courbures de la calotte (50) et du logement (52) de calotte sont choisies de manière à pouvoir, pour un écart angulaire de l'enveloppe (14) de filtre, faire glisser l'une sur l'autre sans perturbation les surfaces d'appui associées se trouvant en contact l'une avec l'autre.

5. Installation de filtration suivant la revendication 3 ou 4, **caractérisée en ce que**, dans le prolongement de la calotte (50), considéré dans la direction de l'enveloppe (14) de filtre, il est prévu, dans la partie (32) de tête pivotante, une soupape (56) de dérivation, dont la partie (58) de fermeture ferme, dans l'état non actionné, l'ouverture (88) d'une coiffe (22) d'extrémité voisine de l'enveloppe (14) de filtre.

6. Installation de filtration suivant l'une des revendications précédentes, **caractérisée en ce que** la tête (26) de filtre est constituée à la manière d'un couvercle à rebord ou fileté.

7. Installation de filtration suivant l'une des revendications précédentes, **caractérisée en ce que** l'enveloppe (14) de filtre forme, avec l'élément (18) de filtre, une unité de construction, qui a un dispositif (96) de fixation, qui peut être inséré dans une position de base axialement dans un dispositif (98) de réception de la partie (32) de tête pivotante, et **en ce que**, après avoir effectué un mouvement de rotation hors de cette position de base, le dispositif (96) de fixation peut être encliqueté avec le dispositif (98) de réception en une position d'encliquetage à l'aide de moyens (108) d'encliquetage.

8. Installation de filtration suivant l'une des revendications précédentes, **caractérisée en ce que** l'enveloppe (14) de filtre entoure à distance radiale l'élément (18) de filtre et est pourvue, pour un passage de fluide, d'ouvertures (16) d'enveloppe, et **en ce que** l'élément (18) de filtre communique fluidiquement à sa coiffe (24) d'extrémité, opposée à sa soupape (56) dérivation par son intérieur (74), qui est entouré d'un matériau (20) d'élément de filtre, par l'intermédiaire d'une ouverture (90) avec l'environnement, de préférence sous la forme d'un espace (12) intérieur de réservoir.
